Europäisches Patentamt

**European Patent Office**

**Office européen des brevets**

(19)

(11) Publication number: **0 176 633**
**A1**

(12) # EUROPEAN PATENT APPLICATION

(21) Application number: **84304757.2**

(22) Date of filing: **11.07.84**

(51) Int. Cl.⁴: **G 01 C 17/28**

(43) Date of publication of application:
**09.04.86 Bulletin 86/15**

(84) Designated Contracting States:
**DE FR IT NL SE**

(71) Applicant: **BRITISH AEROSPACE PUBLIC LIMITED
COMPANY
100 Pall Mall
London SW1Y 5HR(GB)**

(72) Inventor: **Owen, James Barry British Aerospace P.L.C.
Warton Preston
Lancasire PR4 1AX(GB)**

(72) Inventor: **Wilkinson, Peter Royd British Aerospace P.L.C
Warton Preston
Lancasire PR4 1AX(GB)**

(74) Representative: **Dowler, Edward Charles et al,
British Aerospace Public Limited Company Corporate
Patents Department Brooklands Road
Weybridge Surrey, KT13 OSJ(GB)**

(54) **Compasses.**

(57) Previously proposed solid state compasses using Hall-effect magnetic field sensing elements are not generally useful in a context, such as on board an aircraft, where the compass may be subject to large changes in attitude relative to a horizontal plane and may be movable with respect to the earth in three dimensions. The compass disclosed herein comprises three orthogonally arranged Hall-effect devices for forming signals indicative of components of the Earth's magnetic field along the axes of an axis system fiexed with respect to the compass, and a computer arranged to receive these signals and to receive signals, for example from the navigation system of an aircraft on which the compass is installed, indicative of the attitude of the axis system relative to the horizontal, the computer being programmed to calculate from these signals a true heading angle. By this means, the compass can remain operable even during say dynamic manoeuvering of an aircraft on which it is installed.

EP 0 176 633 A1

TITLE:  COMPASSES

This invention relates to compasses, more particularly but not exclusively to compasses for use in a high manoeuvrability context such as on board an aircraft.

A modern aircraft generally comprises a quite sophisticated navigation system which includes means for indicating to the pilot the compass direction of flight or 'heading' of the aircraft.  However, it is desirable to provide also some reasonably simple back-up device and hitherto, this has usually taken the form of a 'floating ball' magnetic compass.  Such a device is simple, reliable and relatively cheap but has one drawback which is serious in certain contexts.  In particular, during sustained dynamic manoeuvres such as those performed by combat or aerobatic display aircraft, the compass is not usable and, even afterwards, may take too long to restabilise.

It has been proposed to make a 'solid state' compass using magnetic field sensors such as Hall-effect devices and inductive elements.  Examples of such prior proposals may be found in U.S. patent specification No. 4,030,204; in an article entitled 'Electronic Compass using a fluxgate sensor' by Pollock, N., Wireless World, October 1982, page 49; and in an article entitled 'Hall Compass points digitally to Headings' by Steinbough, G., Electronics, Dec. 18, 1980, page 112.  In each case, the proposal is for a two axis compass of the kind that might be used in a land or water vehicle.  Such a compass would not be suitable for an aircraft which can of course move in three dimensions.    The Electronics article although without refering to  aircraft, in fact admits that the compass therein proposed will only work properly if it remains horizontal and some possible solutions are suggested one of which is that 'a third Hall sensor can be mounted perpendicular to the first two and its output used to correct the measured values for any tilt'.    This remains no more than a suggestion however;  no other information is given and in particular there is no indication as to how the massive attitude variations of an aircraft might be accommodated as opposed to the kind of relatively small 'tilt' which might be experienced by a land or water vehicle.    An aircraft may not only be moving up or down but may have a degree of pitch or roll with respect to the direction in which it is moving.

Accordingly, it is one object of this invention to provide a 'solid state' compass which can operate despite quite large changes in attitude and such of the compass with respect to the 'horizontal'.    A subsidiary object is to provide a compass usable in an aircraft or like three-dimensionally movable craft, preferably in the form of a relatively cheap and simple, but nevertheless reliable replacement for an aircraft 'back-up' compass, and which will substantially remain operable during dynamic manoeuvring of the craft.

According to the invention, there is provided a compass comprising sensor means for forming respective digital signals indicative of the components of the Earth's magnetic field along at least three axes of an axis system fixed with respect to the compass, and computing means for receiving said signals and for receiving further signals indicative of the attitude of the axis system relative to a horizontal plane, and operable for calculating the field components in two planes of the axis system, for calculating the magnitudes of the projections of those two field components onto said horizontal plane, and for using said two magnitudes to calculate the direction of North relative to the compass position.

Advantageously, the computing means is able to receive information indicative of the variation between magnetic and true North and selectably to calculate the direction of either relative to the compass position.

For a better understanding of the invention, reference will now be made, by way of example, to the accompanying drawings, in which:-

figure 1 is a simplified circuit diagram of a 'solid state' compass for use in an aircraft,

figure 2 is a program flow diagram illustrating the operation of a computing system used in the figure 1 compass, and

figure 3 is a diagram of a three axis coordinate system associated with an aircraft on which is installed the figure 1 compass.

The illustrated compass comprises three Hall-effect devices 1, 2 and 3 which are mutually orthogonally arranged so as to measure the components of the earth's magnetic field in the airframe axes. The Hall-effect devices are connected between a first output 4 of a regulator 5, at which output there is provided a reference signal derived by the regulator from a drive voltage supplied via drive input terminal 6, and one terminal of a respective one of three differential amplifiers 7, 8 and 9. The other input of each amplifier is fed with a reference signal from a second output of regulator 5. The output of each amplifier is fed via a respective one of three current-amplifying transistors 10, 11 and 12 to a respective one of three analog to digital converters 13, 14 and 15. The converters thus produce respective digital signals indicative of the components measured by the Hall-effect devices. These digital signals are fed to a micro-processor based computing system 16. System 16 also receives information along line 17 from the aircraft navigation computer for example (not shown) concerning the instant pitch and roll angles of the aircraft.

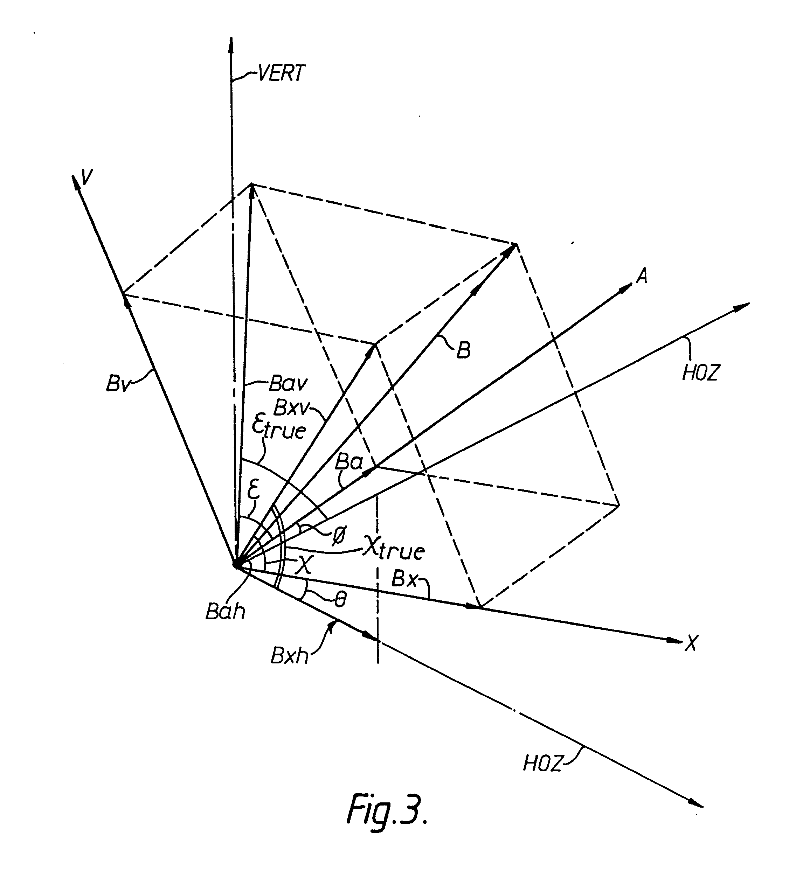

Referring to figures 2 and 3, the computing system 16 is programmed to read the digital values supplied to it by the converters 13 to 15, the values being representative of the components Bx, Ba and Bv of the earth's magnetic field B where Bx is the component along the roll or longitudinal axis X, Ba is the component along the pitch or lateral axis A and Bv is the component along the yaw or normal axis V.   From these values, the
magnitude Bav of the projection of the field  vector B
onto the plane A - V, i.e. the plane containing the axes
A and V, is calculated as Bav $= \sqrt{Ba^2 + Bv^2}$  and the angle
between this projection and the axis A is calculated
as $\varepsilon = \tan^{-1} Bv/Ba$.   The instant pitch angle $\theta$ of the
aircraft is added to $\varepsilon$ to give the angle  $\varepsilon$true
between Bav and the horizontal.

Similarly, the component  Bxv of the field  B in
the plane X - V (containing the X and V axes) is calculated
as $\sqrt{Bx^2 + Bv^2}$ and its angle $X$true relative to the horizontal
is obtained by adding the aircraft roll  angle $\phi$ to the
angle $X$ between Bxv and axis X , $X$ being obtained from
$\tan^{-1} Bv/Bx$.

The horizontal components Bah and Bxh of the
field B can then be obtained from Bah = Bav. Cos $\varepsilon$true  and
Bxh = Bxv.   Cos $X$ true and finally the aircraft heading
$\psi$  obtained as    $\psi = \sin^{-1}\left[\dfrac{Bxh}{\sqrt{Bxh^2 + Bah^2}}\right] \cdot \dfrac{Bxh}{\sqrt{Bxh^2}}$
The heading calculated by the system 16 is
displayed by a solid state display device 18, ideally in
a form which looks somewhat as it would if the usual kind
of 'floating ball' magnetic back-up compass were being used.
Namely, as shown, the heading is displayed as digits beneath
a fixed pointer or cursor 19 and further digits are displayed
each side of the cursor so that it seems as though part of
the scale on a moving ball is being viewed through a rectangular
window.

If desired, the compass can incorporate a switch 20 on the front panel beneath the display device, the switch being operable to control the system 16 so that the aircraft heading is displayed relative either to true or magnetic North as desired. The variation between true and magnetic North is entered into system 16 manually using a 'set-up' switch 21 and an offset generating device, for example a potentiometer 22, also mounted on the compass front panel. When the switch 20 is set to the 'True' position, the system 16 simply biases the heading value $\psi$ obtained as described earlier using the previously entered value of magnetic variation.

As will be realised, the compass forming the subject of this invention is not only usable in an aircraft but is also suitable for use in other situations, most advantage being obtained usually in a situation involving a high degree of manoeuvrability of the compass or its carrier.

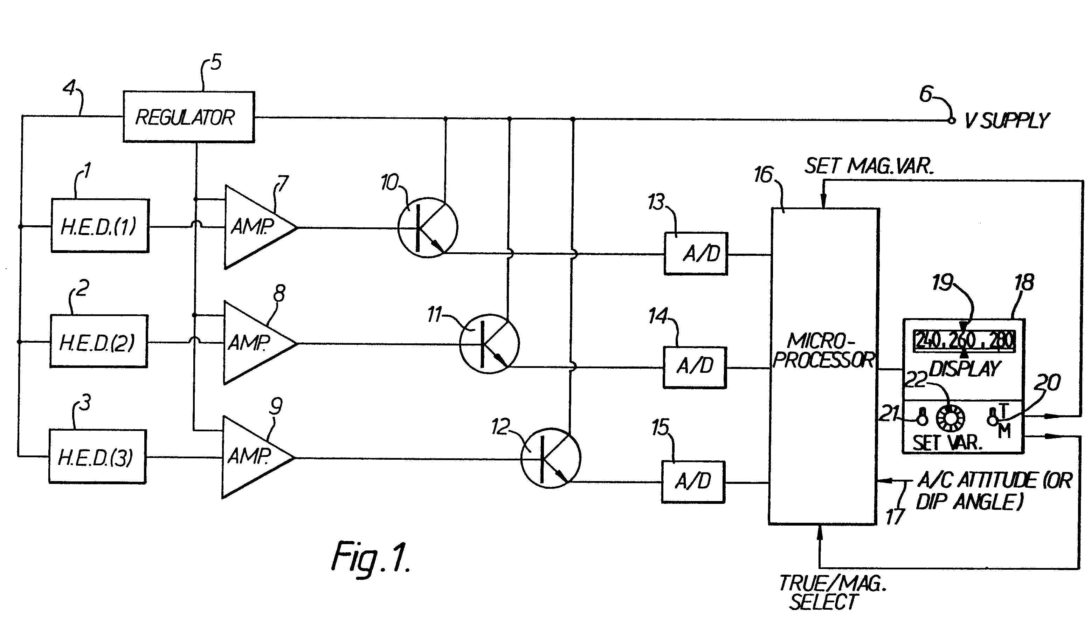

It will be further realised that the figure 1 circuit could incorporate one or more customised integrated circuits replacing some or all of the discrete components presently used therein.

CLAIMS

1.    A compass comprising sensor means for forming respective digital signals indicative of the components of the Earth's magnetic field along at least three axes of an axis system fixed with respect to the compass, and computing means for receiving said signals and for receiving further signals indicative of the attitude of the axis system relative to a horizontal plane, and operable for calculating the field components in two planes of the axis system, for calculating the magnitudes of the projections of those two field components onto said horizontal plane, and for using said two magnitudes to calculate the direction of North relative to the compass position.

2.    A compass according to claim 1, including means for making available to said computing means information indicative of the variation between magnetic North and true North and selector means for causing the computer means to calculate the direction of either true or magnetic North relative to the compass position.

3.    A compass according to claim 1, wherein said sensor means comprises three Hall-effect magnetic field sensing devices, mounting means supporting said devices in mutually orthogonal positions, difference amplifier means connected to said devices and to a common reference signal source and operable to form three output signals respectively representative of the difference between the common reference signal and the respective signals from said devices, and analog-to-digital converting means for forming respective digital signals representative of said difference amplifier means output signals.

4.    A compass according to claim 1, wherein said computing means is programmed to receive the signals $\beta_a$, $\beta_v$ and $\beta_x$ from said sensor means and signals $\theta$ and $\emptyset$ representative of said attitude of the axis system and to calculate from said signals the values:-

$$\beta_{ah} = \beta_a{}^2 + \beta_v{}^2 . \text{Cos} [\tan^{-1}(\beta_v/\beta_a) + \theta]$$

and    $$\beta_{xh} = \beta_x{}^2 + \beta_v{}^2 . \text{Cos} [\tan^{-1}(\beta_v/\beta_x) + \emptyset]$$

and then to calculate from said values $\beta_a h$ and $\beta_x h$, a heading angle equal to $\sin^{-1}(\beta_{xh}/\beta_{xh}{}^2 + \beta_{ah}{}^2). \beta_{xh}/ \beta_{xh}{}^2.$

Fig.1.

REGULATOR
5
4
6 V SUPPLY
1 H.E.D.(1)
2 H.E.D.(2)
3 H.E.D.(3)
7 AMP.
8 AMP.
9 AMP.
10
11
12
13 A/D
14 A/D
15 A/D
16 MICRO-PROCESSOR
SET MAG.VAR.
19 18
240.260.280
DISPLAY
22
21 SET VAR. 20 T/M
17 A/C ATTITUDE (OR DIP ANGLE)
TRUE/MAG. SELECT

0176633
1/3

Fig.3.

European Patent
Office

**EUROPEAN SEARCH REPORT**

0176633
Application number

EP 84 30 4757

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-2 505 042 (PRECILEC)<br>* Page 2, line 37 - page 3, line 19 * | 1,3 | G 01 C 17/28 |
| X | FR-A-2 212 536 (CROUZET)<br>* Page 4, line 5 - page 5, line 18 * | 1,4 | |
| A | US-A-3 183 603 (H. TRENCHARD)<br>* Colomn 3, lines 16-35 * | 2 | |
| A | US-A-3 628 254 (W. BURMEISTER) | 1,4 | |
| A | US-A-2 597 125 (P.A. NOXON) | 1 | |

---

TECHNICAL FIELDS
SEARCHED (Int. Cl 4)

G 01 C

The present search report has been drawn up for all claims

| Place of search | Date of completion of the search | Examiner |
|---|---|---|
| THE HAGUE | 07-03-1985 | DE BUYZER H.J. |